# EUROPEAN PATENT APPLICATION

(11) **EP 4 764 855 A1**
(43) Date of publication of application: **24.06.2026**
(21) Application number: 24222411.1
(22) Date of filing: 20.12.2024
(51) Int. Cl.: G06F 9/50, H04B 7/185, H04L 67/10

(54) **A METHOD FOR DEPLOYING RESOURCE CLUSTERS AMONG MOBILE COMMUNICATION NODES**

(71) Applicant: Siemens Aktiengesellschaft, 80333 München (DE)
(72) Inventor: Magalhães Guimarães, Carlos Eduardo, 69121 Heidelberg (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The proposed embodiments involve deploying a resource cluster among multiple mobile, preferably non-terrestrial communication nodes, such as satellites, with predictable trajectories. The embodiments propose selecting nodes with cohesive trajectories, designating a master node to orchestrate tasks, and connecting this master node with another in a second resource cluster. This reduces algorithm and lifecycle complexity by subdividing the mobile or nomadic infrastructure into more stable clusters. According to a scalable embodiment, the resource cluster may be supplemented by a superordinate cluster to form a hierarchical structure. This approach facilitates multi-domain scenarios, where lower-level or resource clusters may handle intra-domain orchestration and superordinate cluster may manage inter-domain orchestration. This method may also support federated orchestration between different satellite providers.

## Description

### Technical Field

The disclosed embodiments pertain to the field of mobile communication nodes, in particular non-terrestrial communication nodes or satellites. More specifically, the disclosed embodiments relate to a method for deploying resource clusters among mobile communication nodes.

### Background Art

Contemporary industries demand high volumes and high rates of data transmission. Numerous applications within these industries necessitate global communications capabilities with high data volume or high data rate, extending beyond the service areas of terrestrial-based networks. Additionally, there is an industrial need for distributed computing systems where spatially distributed mobile communication nodes interact with compute and data processing resource pools created through mobile computing resources, such as satellite computing systems or nomadic terrestrial nodes.

Satellites, including Low Earth Orbit or LEO satellites or satellite constellations may serve as mobile communication nodes. Equipped with computing infrastructure, these satellites may establish an edge-cloud system capable of supporting diverse terrestrial computing and data processing applications. Following predefined ground tracks determined by their orbits, they form a dynamic and adaptable infrastructure.

In contrast, terrestrial client nodes (e.g., sensors, actuators, production plants) are generally considered to be fixed in position, despite possessing some degree of mobility. However, given the significantly faster movement of satellites, the mobility of these terrestrial client nodes is relatively negligible. Thus, it is technically justified to regard these terrestrial client nodes as effectively stationary.

A satellite-based computing system may further need to provide communication and computing services at various geo-locations. An orchestration system - such as an edge-cloud orchestration system - may be required to ensure appropriate application deployment or redeployment within its resource pool, thereby meeting the availability and performance requirements of the applications in conjunction with their terrestrial client nodes.

Although the dynamic nature of a resource pool embodied by a satellite computing system offers significant flexibility, it simultaneously introduces several challenges. A major challenge arises from the continuous changes in the topological relationships among the mobile communication nodes and the need to adapt to individually adapt to individual trajectories and changing topological relationships or neighborships among the mobile communication nodes. Despite being deterministic and predictable, these topological changes necessitate frequent reconfiguration of communication links between dynamically changing communication partners and the relocation of applications. The organizational and computational effort required to handle the frequent reconfiguration of communication links between dynamically changing communication partners may increase disproportionately with the number of mobile communication nodes and may particularly reach a handling limit in present or future mega-constellations of satellites.

### Summary of the Invention

Accordingly, there is a need in the art to facilitate the dynamic nature of a resource pool embodied by a plurality of mobile communication nodes, such as non-terrestrial communication nodes or satellites, in a more efficient manner, reducing the frequent connection changes caused by the positional shifts of the mobile communication nodes and easing the organizational effort required for these changes.

These and other challenges are mitigated by the disclosed embodiments, which provide for the deployment of resource clusters within the multiplicity of mobile communication nodes. This approach reduces the organizational efforts to a manageable number of clusters within the resource pool, consisting of an intricate multiplicity of mobile communication nodes.

According to an embodiment, a is provided method for deploying a resource cluster within a multiplicity of mobile communication nodes. Preferably, the mobile communication nodes are non-terrestrial communication nodes or satellites, with a predictable or deterministic trajectory.

In a first step, a subset of mobile communication nodes may be selected from the multiplicity of mobile communication nodes to form a resource cluster. Each mobile communication node may be chosen such that its trajectory and/or position may remain substantially cohesive with the trajectory and/or position of the resource cluster for a definable period of time. Said trajectory and/or position of the resource cluster may comprise an averaged and/or weighted trajectory and/or of all mobile communication nodes to be selected for the resource cluster or already associated with this cluster.

In a second step - which may not necessarily be executed subsequent to the first step but also concurrently with or prior to the first step - a master node is designated from at least one of the mobile communication nodes within the resource cluster to orchestrate computational tasks within the cluster.

In a third step - which may not necessarily be executed subsequent to one of the previously mentioned steps but also concurrently with or prior to the previously mentioned steps - an interface is established to connect the master node of the resource cluster with at least one second master node of a second resource cluster.

According to further embodiments, the proposed resource cluster may be hierarchically expanded to provide a further superordinate cluster being capable of further reducing the organizational effort of connection management even as the number of mobile communication nodes increases.

Advantageously, the disclosed embodiments facilitate a joint orchestration of communication and computing resources. This integrated approach ensures optimal performance and efficiency of satellite-based resource pools. Moreover, the disclosed embodiments maintain robust connectivity between the orchestration entity and the satellite compute nodes, thereby easing consistent reconfigurations of the satellite system.

The disclosed embodiments effectively improve managing the complexity associated with gathering satellites or other deterministically moving communication nodes. While large satellite constellations introduce intricate orchestration tasks and increase the complexity of managing the communication subsystem, the proposed hierarchical cluster structure mitigates this complexity, making the management of large-scale satellite networks more feasible and efficient.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1: illustrates a schematic view of a constellation of satellites;
- FIG. 2: illustrates a constellation of satellites on a same orbital plane;
- FIG. 3: illustrates a constellation of satellites on two different orbital planes; and;
- FIG. 4: illustrates a schematic view of a constellation of satellites organized in clusters.

### Description of Examples

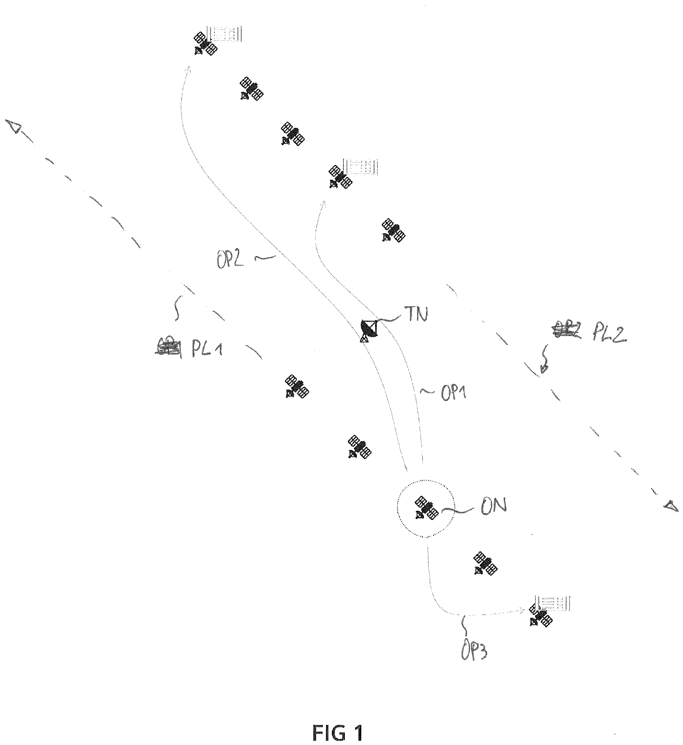

FIG. 1 illustrates a schematic view of an exemplary satellite constellation, featuring ten satellites distributed across two different orbital planes. For reasons of perspective and simplification, these orbital planes are depicted as straight lines in the drawing. Collectively, the satellite constellation may form a resource pool for a satellite communication and computing system.

One important concept of the proposed embodiments is to implement at least one level of orchestration to mitigate a complexity associated with optimizing the allocation of computing and communication resources in scenarios characterized by a substantial number of distributed resource-providing devices. This complexity is further compounded when both client nodes and infrastructure resource nodes are in motion.

The proposed embodiments aim to decompose the optimization problem into more manageable segments by defining at least one cluster comprising a subset of nodes for which a specific resource orchestrator or master node may be designated. A top-level orchestrator or master node may be only required to intervene when the application necessitates a handover of assignments and workload between two clusters of the moving infrastructure. The embodiments ensure a seamless handover, coordinated with master nodes or orchestrators being involved in subordinate clusters.

A possible use case for the proposed embodiments may be an integrated management of communication and computing resources within satellite mega constellations. For the purposes of this disclosure, a »mega-constellation« may refer to an assembly of non-terrestrial communication nodes or satellites that are communicatively interconnected to exchange data among themselves and with terrestrial or non-terrestrial communication partners. Such mega-constellations may comprise a plurality of satellites, potentially extending to hundreds or even thousands.

According to an embodiment, a large constellation may be divided into smaller clusters of satellites in order to configure a distributed orchestration per cluster. In order to deploy a resource cluster may within a multiplicity of mobile communication nodes, a first step is provided wherein a subset of mobile communication nodes is selected from said multiplicity of mobile communication nodes to form a resource cluster. Thereby each mobile communication node may be selected such that its trajectory remains substantially cohesive with the trajectory of the resource cluster for a definable period of time.

The resource cluster may be defined during a system planning and deployment phase. However, they may also be defined during runtime, for example in response to significant changes in topology, such as the launch of new satellites, or in the event of major failure scenarios.

One possible objective for selecting mobile communication nodes to form the resource cluster may include this cluster to remain in a rather stable topology in terms of neighboring relations.

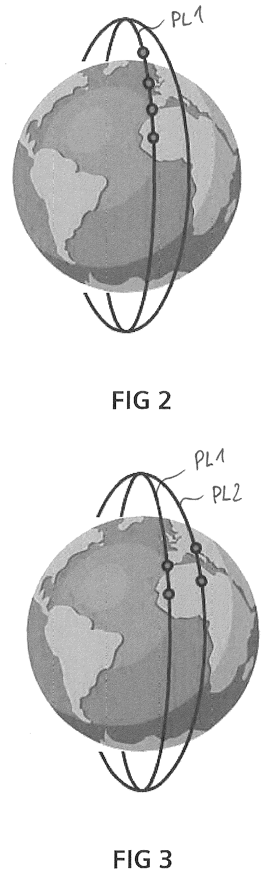

FIG. 2 exemplarily illustrates a constellation of satellites moving in a same orbital plane PL1 around the Earth. The four satellites as shown in FIG. 2 may be selected for inclusion in the resource cluster due to their predictable deterministic movement and stable neighbor relationships, which remain consistent over time. Stable neighbor relationships are maintained because the satellites follow identical orbital paths at a constant velocity, inherently guaranteeing consistent relative positions to each other. The four satellites or mobile communication nodes may, in other words, be selected because their respective trajectories substantially remain cohesive with the trajectory of the - itself moving - resource cluster. A further possible deployment may include several clusters on the same orbital plane PL1.

FIG. 3 exemplarily illustrates a constellation of satellites moving in two different orbital planes PL1, PL2 around the Earth. As depicted in FIG. 3, the planes PL1, PL2 are neighboring orbital planes moving in the same direction. The four satellites or mobile communication nodes may be selected because their respective trajectories substantially remain cohesive for a definable period of time. However, this cohesiveness, or at least the neighborhood relationships of individual satellites with others, may dissolve or change over time. In other words, the cohesiveness in the constellation shown in FIG. 2 is maintained for a longer period than that in FIG. 3.

After or while the resource cluster has been formed, a step of configuring the cluster orchestration may ensue. A master node may be designated within the resource cluster. The master node or local orchestrator for the resource cluster may be responsible for orchestrating computational tasks within the resource cluster. This may include the master node to ensure that the requirements of locally executed applications are met, such as those related to communication latency, computing power, and resilience. In some cases, placing the master node or cluster orchestrator in a different orbit may be beneficial. For example, it may be advantageous to position the orchestrator on a GEO satellite. A GEO satellite, or Geostationary Earth Orbit satellite, is a type of satellite that orbits the Earth at the same rotational speed as the Earth itself. This means that the satellite remains in a fixed position relative to a specific point on the Earth's surface, which advantageously enables ground-based antennas to remain stationary, simplifying the design and operation of the system.

Based on the requirements of applications executed in the satellite and the orbit data of the cluster, the master node or orchestrator may predict times when the applications will be unable to offer the required services. In such cases, the orchestrator may plan for reallocating workloads by transferring them to another suitable cluster. This transfer operation may be executed in coordination with a superordinate master node or orchestrator within a superordinate cluster or, alternatively or additionally, with a board of master nodes or peer master nodes within the superordinate cluster, as further detailed below.

Designating a master node from at least one of the mobile communication nodes may include transferring the master node or designating a master node in parallel with an existing master node or as a replacement for a previous master node. Designating a second master node may involve determining that its trajectory is on a different orbit than that of the first master node.

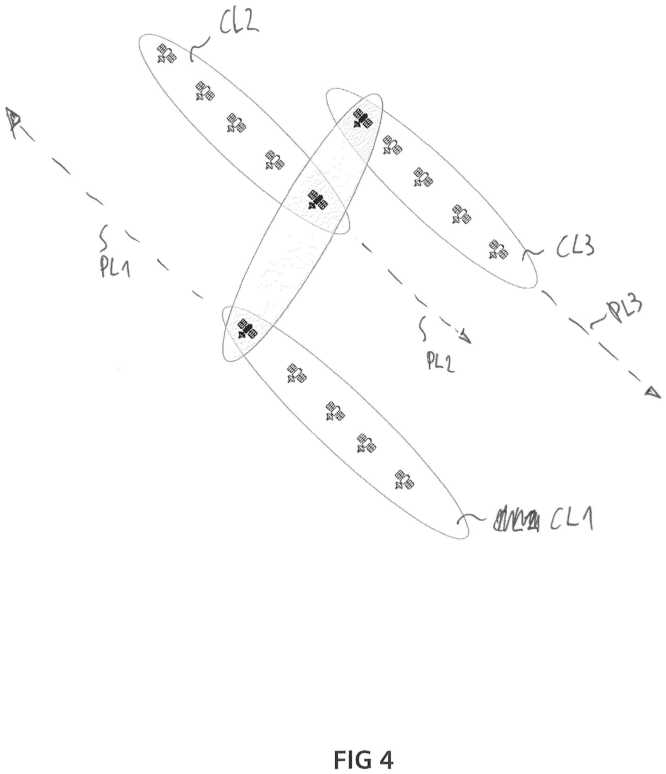

FIG. 4 illustrates a schematic view of a constellation of satellites organized in a multiplicity of clusters CL1, CL2, CL3 which may be hierarchically organized. In the arrangement as shown, three resource cluster or lower-level clusters CL1, CL2, CL3 may be organized into a higher-level cluster or superordinate cluster - symbolized in the drawing by an ellipse extending perpendicular to the ellipses of the resource clusters CL1, CL2, CL3 - in that a respective master node from each resource clusters CL1, CL2, CL3 simultaneously serves as a member of the superordinate cluster, which is symbolized in the drawing by respective master nodes of respective resource clusters CL1, CL2, CL3 also being located within the ellipse symbolizing the superordinate cluster.

Deploying a higher-level cluster or superordinate cluster may include the steps of deploying or utilizing at least two resource clusters CL1, CL2, CL3 and clustering said at least two resource clusters CL1, CL2, CL3 into a superordinate cluster by selecting at least one master node from said at least two resource clusters CL1, CL2, CL3 to participate in the superordinate cluster. The selected master nodes may be communicatively connected to each other to form the superordinate cluster in order to configure multi-level orchestrations. This hierarchy may be further extended upwards by defining an additional top-level cluster above the superordinate cluster.

FIG. 4 specifically illustrates an example of a satellite constellation with three clusters of five satellites distributed to different orbital planes and forming a resource pool for a satellite communication and computing system with multi-level orchestration, where the master nodes of each lower-level cluster CL1, CL2, CL3 are part of the superordinate or top-level cluster. In this case, lower-level cluster CL1, CL2, CL3 are kept stable over longer periods, ideally as long as possible unless failures occur.

A configuration of multi-level orchestrations may encompass one or more, preferably all, clusters within a mega constellation. The superordinate cluster may operate as a fully decentralized orchestration system among master nodes participating as peers within the superordinate cluster. Alternatively, the master nodes may coordinate the operations of the superordinate cluster in a centralized manner, such as by relying on a logically centralized approach where one master node is elected as the superordinate master node. Both approaches may be used in parallel or in addition to facilitate multi-domain scenarios, with lower-level or resource clusters handling intra-domain orchestration and the superordinate cluster managing inter-domain orchestration. This method may also support federated orchestration between different satellite providers.

The superordinate cluster may manage handover of assignments and workload between two clusters of the moving infrastructure. Each master node belonging to the top-level cluster may trigger a need for multi-level orchestration whenever it cannot fulfill requirements of applications by itself. In operation of the clusters, each of the configured clusters may now form a self-contained communication and computing infrastructure, capable of serving different applications from different tenants/users.

Clusters may typically use at least one, preferably more, defined communication gateways to interact with neighboring clusters within the moving infrastructure. These gateways may be implemented as virtual network functions, allowing them to be redeployed to other communication nodes within the cluster if necessary. Master nodes and gateways do not necessarily need to be deployed on the same mobile communication nodes, a separation may be even beneficial in cases where the gateway is relatively stationary with respect to two opposing moving clusters.

During operation, communication between all master nodes may be established and maintained via a direct or indirect link provided by the superordinate cluster. This link may be used to synchronize any necessary reconfiguration, such as those induced by topological changes due to orbits or system failures.

Communication links between master nodes or orchestrators may not necessarily need to be direct. Alternatively, indirect communication routes may be established via or through clusters. Communication between orchestrators can also facilitate a transfer of tenants and/or applications to other clusters in case a context should change, such as when applications need to be available at a specific geographic location.

For all scheduling requests of applications, operational requirements - including computing resources or storage resources -as well as context, such as geo-location or application-specific requirements and dependencies, may be considered according to embodiments.

By implementing a multi-level orchestration, the proposed solution aims to minimize or even avoid changes in the topologies of the lowest-cluster tiers, while exposing more dynamic mechanisms to the higher-level cluster tiers, where only a few selected nodes participate in the process.

Based on operational requirements of applications collectively executed by at least one mobile communication node within one or more resource clusters and the orbit data of the cluster, the master node may anticipate time periods when providing required services will not be possible.

Based on the operational requirements of applications collectively executed by at least one mobile communication node within one or more resource clusters and the orbit data of the cluster, the master node may anticipate and/or determine periods when providing required services will not be possible.

Consequently, the master node may plan to reallocate workloads by transferring them to another suitable resource cluster. This step may be coordinated with the superordinate node or higher-layer orchestrator. Operational requirements may include requirements related to a communication latency, a computing power, a fault tolerance, a recovery time and a resilience requirement of applications collectively executed by at least one mobile communication node.

The proposed embodiments may be advantageously utilized for any kind of mobile and nomadic infrastructures, where communication and computation may differ significantly from terrestrial counterparts. The embodiments aim to provide a more suitable approach for such environments and may be particularly beneficial for implementation in satellite computing systems.

The hierarchical approach of the proposed embodiments may advantageously facilitate multi-domain scenarios, with lower-level clusters handling intra-domain orchestration and the top-level cluster managing inter-domain orchestration. This approach may also support federated orchestration between different satellite providers.

By following a divide-and-conquer paradigm, the proposed embodiments may effectively reduce the complexity of placement algorithms and lifecycle management tasks by subdividing the satellite infrastructure into stable clusters. These embodiments also facilitate the adoption of traditional orchestration solutions, including those used for static infrastructures, within the lower clusters, thereby enhancing satellite environments.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for deploying a resource cluster within a multiplicity of mobile communication nodes, preferably non-terrestrial communication nodes, with a predictable trajectory, the method including the steps of:
- selecting a subset of mobile communication nodes from said multiplicity of mobile communication nodes to form a resource cluster, wherein each mobile communication node is selected such that its trajectory remains substantially cohesive with a trajectory of the resource cluster for a definable period of time;
- designating a master node from at least one of the mobile communication nodes within the resource cluster for orchestrating computational tasks within the resource cluster;
- setting up an interface for connecting the master node of the resource clusters with at least one second master node of a second resource cluster.

2. The method according to claim 1, the master node being responsible for fulfilling operational requirements of applications collectively executed by at least one mobile communication node within the resource cluster.

3. The method according to claim 2, the operational requirements including at least one requirement related to a communication latency, a computing power, a fault tolerance, a recovery time and a resilience requirement of applications collectively executed by at least one mobile communication node.

4. The method according to one of the aforementioned claims, wherein designating a master node from at least one of the mobile communication nodes includes designating a master node in parallel with an existing master node or as a replacement for a previous master node.

5. The method according to claim 4, including the step of designating a second master node such that its trajectory is on a different orbit than a first master node.

6. The method according to one of the aforementioned claims, including the steps of:
- deploying at least two resource clusters;
- clustering said at least two resource clusters into a superordinate cluster by selecting at least one master node from said at least two resource clusters to participate in the superordinate cluster; and;
- communicatively connecting the selected master nodes to each other to form the superordinate cluster.

7. The method according to claim 6, including the step of operating the superordinate cluster as a fully decentralized orchestration system among master nodes participating as peers within the superordinate cluster.

8. The method according to claim 6, including the step of designating a superordinate master node among master nodes participating in the superordinate cluster, the superordinate master node coordinating the operations of the superordinate cluster in a centralized manner.

9. The method according to claim 8, the superordinate master node coordinating a handover and an assignment of workload between applications collectively executed by at least one resource cluster.

10. A resource cluster including a subset of a multiplicity of mobile communication nodes, preferably non-terrestrial communication nodes, with a deterministically predictable trajectory, the resource cluster including:
- the subset being assembled from mobile communication nodes, each having a trajectory remaining substantially cohesive with a trajectory of the resource cluster for a definable period of time;
- a master node being designated from at least one of the mobile communication nodes within the resource cluster for orchestrating computational tasks within the resource cluster;
- an interface for connecting the master node of the resource clusters with at least one other master node of another resource cluster.

11. A superordinate cluster including at least one resource cluster according to claim 10.

12. A superordinate cluster including at least one master node of at least two resource cluster according to claim 10, wherein each of said at least one master node participating in the superordinate cluster are communicatively connected to each other to form the superordinate cluster.
